# EUROPEAN PATENT APPLICATION

(11) **EP 0 551 548 A1**
(43) Date of publication of application: **21.07.1993**
(21) Application number: 92100734.0
(22) Date of filing: 17.01.1992
(51) Int. Cl.: F16L 37/092

(54) **Connecting means for co-directionally abutting pipes**

(71) Applicant: ELIEZER KRAUSZ INDUSTRIAL DEVELOPMENT LTD., Tel Aviv 46484 (IL)
(72) Inventor: Krausz, Eliezer, Tel Aviv 46484 (IL)
(74) Representative: Kraus, Walter, Dr.

(57) **Abstract**

The present invention relates to a sleeve like member (1) to be used as a pipe connecting means, one end portion whereof corresponds substantially with diameter of the pipes (6,11) being connected, while the other end portion is of a larger diameter, its extreme end being inwardly bent through 90 degrees forming a rim (4) and a seat for an annular packing seal which fits into the wide portion of said sleeve like member, said member being welded to a pipe at the bent rim.

## Description

The present invention relates to connecting means for two co-directionally abutting pipes. The connecting and sealing thereof is effected in a simple way by a sleeve like member which includes an annular seal.

Water pipes, sewage pipes or other pipe network are co-directionally connected to each other either by specially designed joints or directly welded to one another. The type which is used for so connecting pipes very much depends on the kind of pipes used, the expected pressures, type of liquid to be conveyed and other factors.

The present invention relates to means for connecting the ends of two abutting co-directional pipes of the same or different diameter involving minimal work in situ.

According to the invention there is provided a sleeve like member, one end portion whereof corresponds substantially with diameter of the pipes being connected while the other end portion is of a larger diameter its extreme end being inwardly bent through 90^{o} forming a rim and a seat for an annular packing seal which fits into the wide portion of said sleeve like member, said member being welded to a pipe at the bent rim.

In a preferred embodiment a collar like portion extends from said rim.

In an even further preferred embodiment the seat portion of said sleeve like member is conical.

The invention will now be described with reference to the annexed drawings in which:
Fig. 1 is an axial sectional illustration of the preferred embodiment of the sleeve like member.
Fig. 2 is a sectional view of the seal.
Fig. 3 is a sectional axial view of the assembled connecting member.
Fig. 4 is a sectional view of two connected pipe ends, while

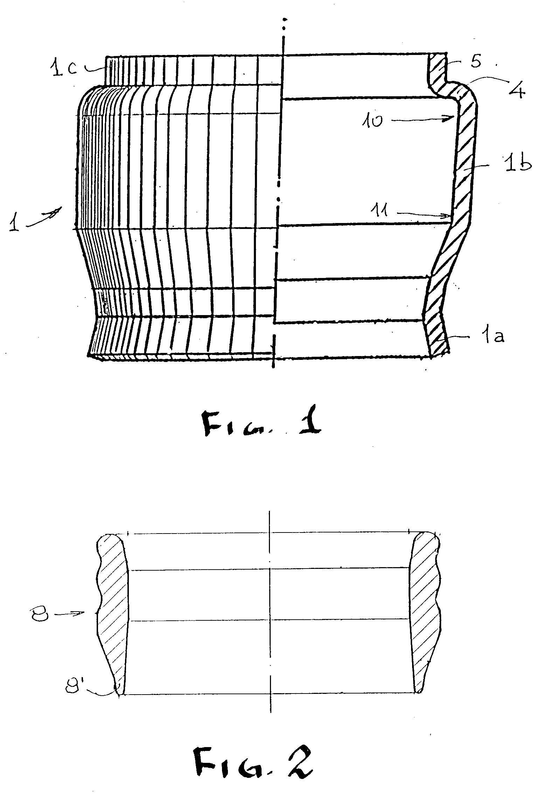

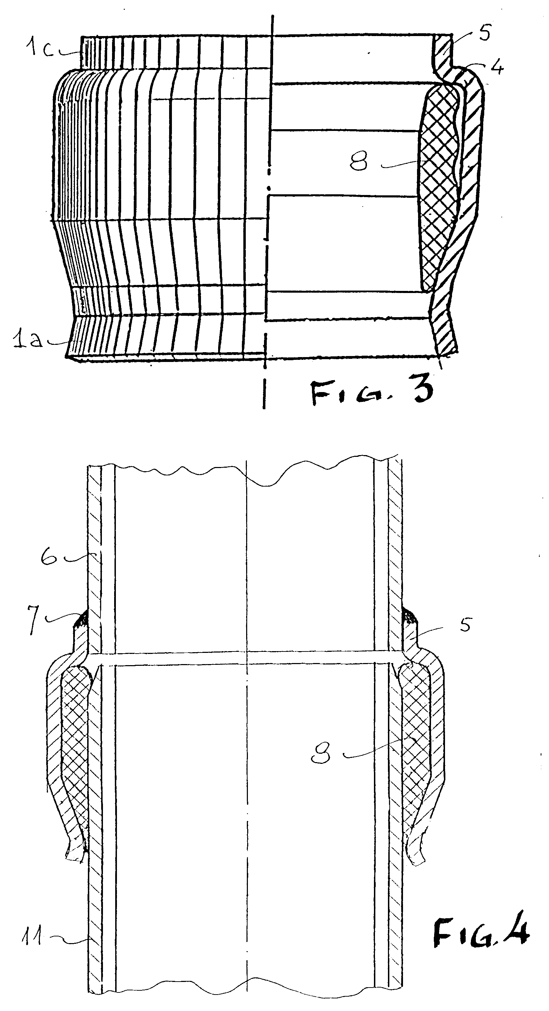

Turning first to Fig. 1, the sleeve like member 1 includes three portions: the one 1a having an inner diameter which corresponds with the outer diameter of the pipe to be connected while the second portion 1b has a wider diameter, the third portion 1c is formed by an inwardly bent through 90^{o} margin forming a rim 4, which in turn is preferably bent again through 90^{o} forming a collar 5 which defines a circular opening of a diameter equal to that of the diameter of the pipe to be connected. To said collar 5 pipe 6 is welded at 7 (see Fig. 4). Within the space enclosed by the wider portion 1b of sleeve 1, a seal 8 is placed, said seal has a specially designed configuration as seen in Fig. 2.

When a pipe 11 is inserted into sleeve 1, the curved section of the seal 8 provides grip and scaling. By employing the above described connection system, it is not necessary to weld pipes on site of use where the pipes are laid.

In the preferred embodiment of the sleeve portion 1b is slightly conical i.e. the diameter at 10 is slightly larger than the diameter at 11. This constructions prevents the withdrawal of the pipes once inserted therein., due to the fact that portion 8 of the seal acts as a wedge.

## Claims

1. A sleeve like member to be used as a pipe connecting means, one end portion whereof corresponds substantially with diameter of the pipes being connected, while the other end portion is of a larger diameter, its extreme end being inwardly bent through 90 degrees forming a rim and a seat for an annular packing seal which fits into the wide portion of said sleeve like member, said member being welded to a pipe at the bent rim.

2. A sleeve like member as claimed in claim 1, characterised thereby that said seal is provided with means designed to prevent slipping out of the pipe from said seal.

3. A seal as claimed in claim 2, characterised thereby that said seal is provided with a curved section.

4. A sleeve like member as claimed in claim 2 characterised thereby that said seal is provided with a wedge like portion.

5. A sleeve like member as claimed in claim 1, characterised thereby that said seal like member is welded to a pipe.
